# FASCICULE DE BREVET EUROPEEN

(11) **EP 1 557 353 B1**
(45) Date de publication et mention de la délivrance du brevet: **09.01.2008**
(21) Numéro de dépôt: 05290103.0
(22) Date de dépôt: 18.01.2005
(51) Int. Cl.: B64C 13/24

(54) **Dispositif d'actionnement comprenant des moyens autonomes de blocage des arbres d'entraînement**
Betätigungsvorrichtung mit eigenständigen Mitteln zur Blockierung der Antriebsstränge
Actuator device comprising autonomous means for blocking the drive chains

(30) Priorité: 21.01.2004 FR 0400540
(43) Date de publication de la demande: 27.07.2005
(73) Titulaire: Goodrich Actuation Systems SAS, 78530 Buc (FR)
(72) Inventeur: Port-Robach, Isabelle, 95170 Deuil la Barre (FR); Medina, Raphäel, 95230 Soisy sous Montmorency (FR)
(74) Mandataire: Texier, Christian

(56) Documents cités:
- US-A- 4 706 791
- US-A1- 2002 093 298

## Description

L'invention est relative à un dispositif d'actionnement, notamment pour commande de vol d'aéronef.

Elle trouve en particulier avantageusement application pour actionner un élément de réglage de plan horizontal sur un avion (gouverne de profondeur), d'autres applications étant néanmoins possibles.

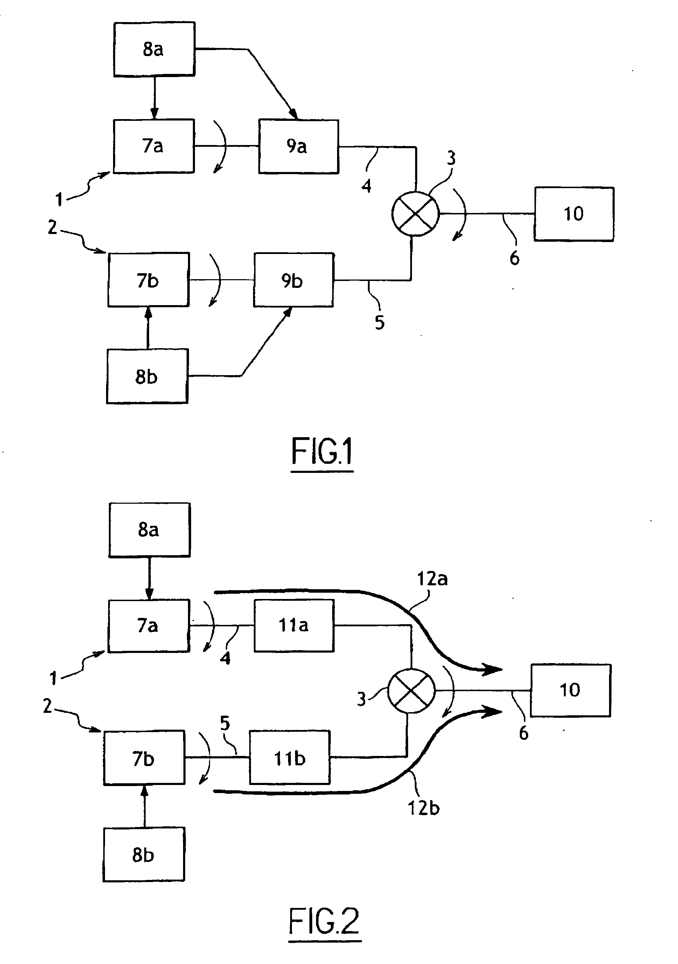

Le plan horizontal de certains avions est actionné, ainsi que l'illustre la figure 1, au moyen de deux chaînes d'entraînement 1, 2 et d'un différentiel 3 qui relie des arbres 4,5 en sortie de ces deux chaînes à un arbre de commande 6 relié à un plan horizontal 10.

Chacune des deux chaînes d'entraînement 1, 2 comporte un moteur 7a, 7b relié via l'arbre 4, 5 à l'entrée correspondant du différentiel 3.

Le différentiel 3 est généralement un différentiel sommateur de vitesse, de sorte que l'arbre de commande 6 en sortie du différentiel 3 est animé d'une vitesse de rotation étant la demi-somme des vitesses de rotation desdits moteurs 7a, 7b.

A chacun desdits moteurs 7a, 7b est associé un moyen de blocage pour l'arbre 4, 5 en entrée du différentiel 3.

Chaque moyen de blocage d'un arbre en entrée du différentiel est adapté pour se mettre en position de blocage, et donc entraîner le blocage de l'arbre en entrée correspondant du différentiel, en cas de perte d'alimentation ou d'un moteur.

Il s'agit effectivement d'éviter qu'une telle perte d'alimentation ou d'un moteur ne se traduise par une perte de couple de ce moteur, ce qui pourrait entraîner l'autre moteur, toujours actif, à transmettre sa puissance, non pas à la sortie du différentiel, mais au moteur défectueux.

Les deux chaînes 1, 2 peuvent à cet effet être des chaînes à puissance hydraulique.

Elles comportent alors chacune un moteur hydraulique 7a, 7b actionné par une source hydraulique 8a, 8b ainsi que des moyens 9a, 9b formant frein à manque de pression qui permettent de bloquer l'arbre 4, 5 dudit moteur 7a, 7b lorsque la pression hydraulique de la chaîne correspondante est perdue, de façon à alors définir un point d'appui pour le différentiel 3 et permettre à la deuxième chaîne hydraulique d'entraîner seule le différentiel 3 et l'arbre de commande 6 relié au plan horizontal.

Les deux chaînes 1, 2 peuvent également être des chaînes électriques.

Elles comportent alors chacune un moteur électrique 7a, 7b actionné par une source de courant 8a, 8b ainsi que des moyens 9a, 9b formant frein à manque de courant qui permettent de bloquer l'arbre dudit moteur 7a, 7b lorsque l'alimentation en courant de la chaîne correspondante est interrompue, de façon à alors définir un point d'appui pour le différentiel 3 et permettre à la deuxième chaîne électrique d'entraîner seule le différentiel 3 et l'arbre de commande 6 relié à la gouverne de profondeur 10.

Chacun des freins à manque de courant est en position ouverte et consomme du courant (et donc de la puissance) de manière continue lorsque la source d'alimentation correspondante est disponible.

On comprend que la puissance ainsi consommée n'est pas considérée comme une puissance utile pour le dispositif d'actionnement, puisqu'elle ne sert qu'à maintenir les freins en position ouverte.

D'une manière générale, on souhaite pouvoir disposer d'un dispositif d'actionnement dans lequel les moyens de blocage d'un arbre en entrée du différentiel ne nécessitent pas d'actionnement externe et sont par conséquent indépendants du mode d'alimentation (électrique ou hydraulique).

Dans le cas particulier de l'entraînement électrique, on souhaite également pouvoir disposer d'un dispositif d'actionnement ne consommant pas inutilement de la puissance pour le maintien des freins en position ouverte, afin de minimiser la consommation de puissance.

L'invention a pour but de proposer une solution en ce sens qui soit fiable et particulièrement simple.

Le document US-A-2002/093298 décrit un dispositif d'actionnement pour véhicule dont les chaînes d'entraînement sont à transmission autobloquante

A cet effet, l'invention propose un dispositif d'actionnement, notamment pour commande de vol d'aéronef, comportant au moins deux chaînes d'entraînement et un différentiel qui relie la sortie de chacune des chaînes à un arbre de commande relié à un élément à actionner et comportant également des moyens pour bloquer les chaînes d'entraînement dans le cas où elles ne fonctionnent pas, lesdits moyens pour bloquer les chaînes étant montés sur la sortie de chacune des chaînes, en amont du différentiel (3), et adaptés pour fonctionner sans actionnement externe de manière à:
- laisser passer les efforts d'action provenant de la chaîne d'entraînement correspondante, pour l'entraînement de l'arbre de commande ;
- bloquer les efforts de réaction provenant de l'arbre de commande lorsque ladite chaîne d'entraînement correspondante ne fonctionne pas

Des aspects préférés, mais non limitatifs du dispositif selon l'invention sont les suivants :
- la sortie de chacune des chaînes comporte un arbre relié à l'un des moyens de blocage et lesdits moyens de blocage comportent un dispositif d'entraînement unidirectionnel en rotation de deux arbres, relié d'une part à l'arbre en sortie de la chaîne d'entraînement correspondante et de l'autre part à un arbre en entrée du différentiel et adapté pour que la rotation de l'arbre en sortie de la chaîne d'entraînement entraîne celle de l'arbre en entrée du différentiel et pour que la rotation de l'arbre en entrée du différentiel soit bloquée, n'entraînant pas celle de l'arbre en sortie de la chaîne d'entraînement ;
- le dispositif d'entraînement unidirectionnel en rotation peut être de type roue libre irréversible ;
- le différentiel est un sommateur de vitesse de sorte que l'arbre de commande en sortie du différentiel est animé d'une vitesse de rotation fonction de la somme des vitesses de rotation desdits moteurs ;
- les chaînes d'entraînement peuvent être de type hydrauliques ou électriques ;
- enfin, l'invention concerne également un dispositif pour actionner un élément de réglage de plan horizontal sur un avion, caractérisé en ce qu'il est constitué par un dispositif selon l'un des aspects dont il vient d'être fait état.

D'autres caractéristiques et avantages de l'invention ressortiront encore de la description qui suit, laquelle est purement illustrative et non limitative et doit être lue en regard des dessins annexés sur lesquels :
- la figure 1, déjà discutée, est une représentation schématique d'un dispositif d'actionnement conforme à un mode de réalisation connu ;
- la figure 2 est une représentation schématique d'un dispositif d'actionnement conforme à l'invention, lors du fonctionnement normal de chacune des chaînes d'entraînement ;
- la figure 3 est une représentation schématique d'un dispositif d'actionnement conforme à l'invention, lorsque l'une des chaînes d'entraînement ne fonctionne pas ;
- la figure 4 est une représentation schématique d'un dispositif d'actionnement conforme à l'invention illustrant le blocage des efforts de réaction en provenance de l'arbre de commande, lors de la défaillance totale des chaînes d'entraînement ;
- la figure 5 est une représentation en volume d'une structure possible pour les moyens de blocage utilisés notamment pour bloquer l'arbre en sortie d'une chaîne d'entraînement.

Le dispositif conforme à un mode de réalisation possible de l'invention qui est illustré sur la figure 2 est similaire à celui de la figure 1, mais comporte, à la place des moyens 9a, 9b formant frein, des moyens de blocage 11a, 11b permettant de laisser passer les efforts d'action et bloquer les efforts de réaction

Plus précisément, lesdits moyens de blocage 11a, 11b sont des moyens mécaniques autonomes permettant d'assurer automatiquement le fonctionnement décrit ci-après.

Lesdits moyens de blocage peuvent être des roues libres irréversibles telles que celles qui sont développées et fournies par la société SIAM RINGSPANN (par exemple celles qui disposent de la dénomination Irréversible Série 140).

Comme cela apparaît sur la figure 2, lorsque les moteurs 7a, 7b fonctionnent, les efforts d'action provenant de chacun des arbres 4, 5 en sortie des chaînes 1, 2 d'entraînement sont transmis à l'arbre de commande 6 via le différentiel 3.

On a représenté sur la figure 2 par des flèches 12a, 12b les transmissions des efforts d'action depuis les moteurs 7a, 7b vers le plan horizontal 10.

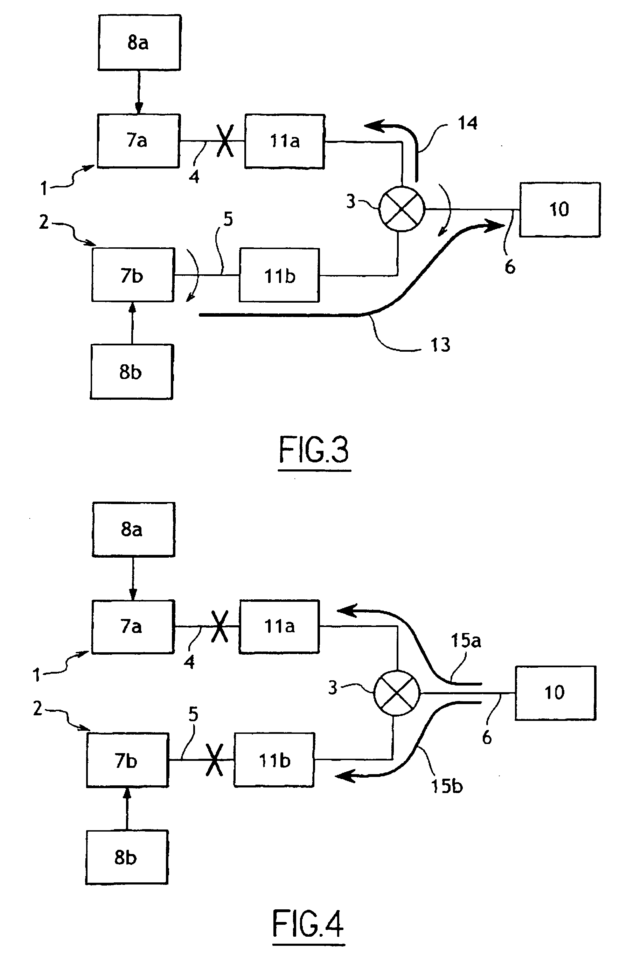

Comme cela apparaît sur le figure 3, lorsque l'un des moteurs (par exemple le moteur 7a) défaille et que l'autre (ici le moteur 7b) est en fonctionnement, ledit moteur en fonctionnement (ici 7b) transmet son effort au différentiel 3 puis vers le moteur défaillant (ici 7a) via l'arbre de sortie (ici 4) de la chaîne défaillante (ici 1).

Cependant le moyen de blocage (ici 11a) disposé sur la chaîne défaillante (ici 4) permet d'assurer un point d'appui sur l'entrée du différentiel 3 reliée à l'arbre en sortie (ici 4) de la chaîne défaillante.

De telle sorte, les efforts de réaction ne peuvent être transmis au moteur défaillant (ici 7a) et finalement, la puissance du moteur en fonctionnement est transmise à l'arbre de commande 6 en sortie du différentiel, la chaîne en fonctionnement (ici 5) entraînant seule le différentiel 3 et l'arbre de commande 6 relié à la gouverne de profondeur 10.

On a représenté sur la figure 3 par une flèche 13 la transmission de l'effort d'action depuis le moteur 7b vers la gouverne de profondeur 10 et par une flèche 14 le blocage de la transmission de l'effort de réaction sur la chaîne d'entraînement 4 liée au moteur 7a défaillant.

Comme cela apparaît sur la figure 4, lorsque aucun des moteurs 7a, 7b ne fonctionnent, lesdits moyens de blocage 11a, 11b forment des points d'appui sur chacune des entrées du différentiel, ce qui empêche la transmission des efforts de réaction depuis l'arbre de commande 6 vers chacun des arbres de sortie 4, 5.

On a représenté sur la figure 4 par des flèches 15a, 15b le blocage de la transmission des efforts de réaction sur respectivement la chaîne d'entraînement 4 liée au moteur 7a et la chaîne d'entraînement 5 liée au moteur 7b.

On précise que les moteurs 7a, 7b peuvent être des moteurs hydrauliques, auquel cas ils sont alimentés par des sources hydrauliques 8a, 8b. Les moteurs 7a, 7b peuvent également être des moteurs électriques, auquel cas ils sont alimentés par des sources de courant 8a, 8b.

On notera que les moyens de blocage 11a, 11b sont autonomes et ne nécessitent, au contraire des moyens 9 formant frein des dispositifs de l'art antérieur schématisé sur la figure 1, aucun actionnement externe.

Lesdits moyens de blocage 11a, 11b peuvent ainsi être utilisés indifféremment sur des chaînes d'entraînement électriques ou hydrauliques.

En outre, ils ne consomment aucune puissance, ce qui permet de limiter la consommation de puissance globale d'un tel dispositif d'actionnement, notamment pour commande de vol d'aéronef.

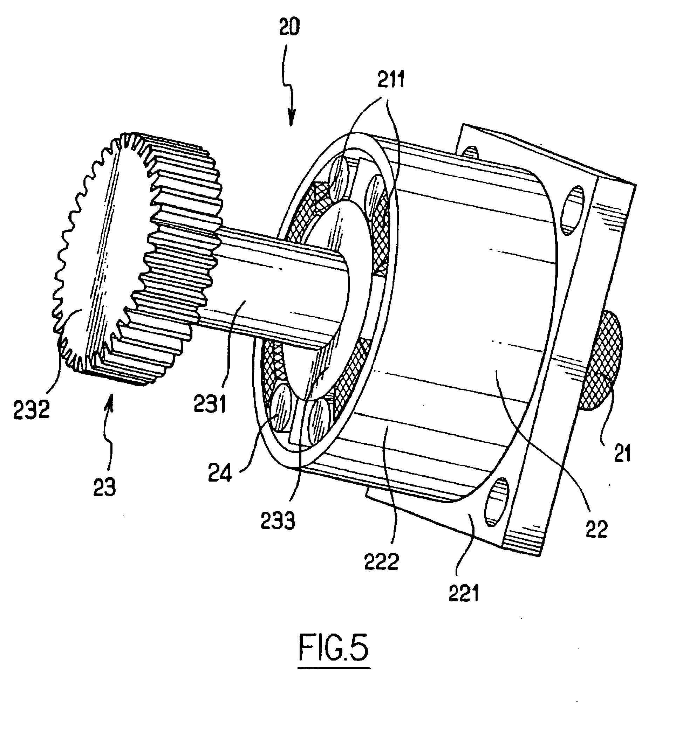

Une structure possible pour les moyens de blocage 11a, 11b est détaillée par la suite, en référence à la figure 5.

La figure 5 présente ainsi un moyen de blocage 20 destiné à être intercalé entre un arbre en sortie d'une chaîne d'entraînement et une entrée du différentiel.

Ledit moyen de blocage 20 est plus précisément un dispositif mécanique d'entraînement unidirectionnel en rotation.

Un tel dispositif, classiquement connu en soi, assure un accouplement de deux arbres selon un mode « roue libre irréversible ».

L'un des arbres est l'élément menant, l'autre est l'élément mené de sorte que la rotation de l'arbre menant entraîne la rotation de l'arbre mené, alors que la rotation de l'arbre mené est bloquée par le dispositif et que son effet n'est pas transmis à l'élément menant.

Dans le cadre de l'invention, l'arbre menant est relié à l'arbre de sortie de l'une des chaînes d'entraînement ; l'arbre mené est relié à une entrée du différentiel.

La description ci-après rappelle de manière succincte le fonctionnement d'un tel dispositif d'entraînement unidirectionnel en rotation dans le cadre de l'invention.

Le moyen de blocage comporte un bâti 22 comprenant une base 221 parallélépipédique et un tube cylindrique 222 reposant sur ladite base.

Une première pièce 21 pénètre à travers une ouverture prévue à cet effet dans la base 221 du bâti 22. Ladite première pièce 21 est destinée à être entraînée en rotation par l'arbre en sortie d'une chaîne d'entraînement sous l'action du moteur pilotant ladite chaîne.

Une deuxième pièce 23 pénètre dans le tube cylindrique 222 du bâti 22. Ladite deuxième pièce 23 comporte un arbre 231 dont l'extrémité ne pénétrant pas dans le bâti forme un pignon 232 destiné à venir s'engrener sur une entrée du différentiel.

La première pièce. 21 comporte un plateau agencé à la base du tube du bâti et sur le pourtour duquel sont agencés des doigts 211.

La deuxième pièce 23 comporte du côté pénétrant dans le bâti 22 une came 233 destinée à venir s'engager entre les doigts 211 mentionnés ci-dessus.

Des rouleaux 24 en opposition symétrique ainsi que des logements pouvant accueillir lesdits rouleaux sont prévus à l'intérieur du tube cylindrique 222 de manière à assurer la fonction d'entraînement unidirectionnel en rotation.

Les efforts de réaction provenant du différentiel provoquent une rotation de la deuxième pièce 23 et donc de la came 233. Celle-ci est conformée de manière à ce que sa rotation vienne coincer les rouleaux 24 dans leurs logements. Lesdits efforts de réaction sont alors transmis et absorbés par le bâti 22.

Les efforts d'action provenant du moteur provoquent une rotation de la première pièce 21. Les doigts 211 viennent alors agir sur les rouleaux 24, par disparition d'un jeu correspondant à la course nécessaire pour les décoincer. Une fois les rouleaux débloqués et ledit jeu rattrapé, lesdits efforts d'action peuvent être transmis à la deuxième pièce 23.

Finalement, on comprend que le dispositif 20 assure bien l'entraînement unidirectionnel en rotation desdites première 21 et deuxième 23 pièces.

La première pièce 21, entraînée en rotation par l'arbre en sortie d'une chaîne d'entraînement lors du fonctionnement normal de cette dernière, transmet ainsi son mouvement de rotation à la deuxième pièce 23.

En cas de défaillance de la chaîne d'entraînement, la deuxième pièce est entraînée en rotation par les efforts de réaction provenant du différentiel. La rotation de la deuxième pièce est alors bloquée (absorbée par le bâti), si bien que la première pièce n'est pas entraînée en rotation.

Comme cela a déjà été mentionné précédemment, de tels moyens de blocage viennent avantageusement se substituer aux freins de type à manque de courant ou à manque de courant jusqu'à présent utilisés dans les dispositifs d'actionnement de gouverne d'aéronef.

On notera que le dispositif qui vient d'être décrit est particulièrement avantageux pour actionner un élément de réglage de plan horizontal sur un avion.

## Revendications

1. Dispositif d'actionnement pour commande de vol d'aéronef, comportant au moins deux chaînes d'entraînement (1, 2) et un différentiel (3) destiné à relier la sortie de chacune des chaînes à un arbre de commande (6) lui-même relié à un élément à actionner (10), et des moyens (11 a, 11 b) de blocage montés sur la sortie de chacune des chaînes, en amont du différentiel (3), pour bloquer les chaînes d'entraînement dans le cas où elles ne fonctionnent pas,
**caractérisé en ce que** lesdits moyens (11a, 11b) de blocage sont adaptés pour fonctionner sans actionnement externe de manière à :
• laisser passer les efforts d'action provenant de la chaîne d'entraînement (4, 5) correspondante, pour l'entraînement de l'arbre de commande (6) ;
• bloquer les efforts de réaction provenant de l'arbre de commande (6) lorsque ladite chaîne d'entraînement correspondante ne fonctionne pas.

2. Dispositif selon la revendication précédente, dans lequel la sortie de chacune des chaînes comporte un arbre (4, 5) relié à un desdits moyens de blocage (11 a, 11 b), **caractérisé en ce que** lesdits moyens (11 a, 11 b) de blocage comportent chacun un dispositif d'entraînement unidirectionnel en rotation de deux arbres, relié d'une part à l'arbre en sortie (4, 5) de la chaîne d'entraînement (1, 2) correspondante et d'autre part à un arbre en entrée du différentiel (3) et adapté pour que la rotation de l'arbre en sortie de la chaîne d'entraînement entraîne celle de l'arbre en entrée du différentiel et pour que la rotation de l'arbre en entrée du différentiel soit neutralisée, n'entraînant pas celle de l'arbre en sortie de la chaîne d'entraînement.

3. Dispositif selon la revendication précédente, **caractérisé en ce que** le dispositif d'entraînement unidirectionnel en rotation est de type roue libre irréversible.

4. Dispositif selon l'une des revendications précédentes, **caractérisé en ce que** le différentiel est un sommateur de vitesse de sorte que l'arbre de commande (6) en sortie du différentiel (3) est animé d'une vitesse de rotation fonction de la somme des vitesses de rotation desdits moteurs (7a, 7b).

5. Dispositif selon la revendication précédente, **caractérisé en ce que** le différentiel sommateur de vitesse permet d'animer l'arbre de commande d'une vitesse de rotation égale à la demi-somme des vitesses de rotation desdits moteurs (7a, 7b).

6. Dispositif selon l'une des revendications précédentes, **caractérisé en ce que** les chaînes d'entraînement sont de type hydrauliques.

7. Dispositif selon l'une des revendications 1 à 5, **caractérisé en ce que** les chaînes d'entraînement sont de type électriques.

8. Dispositif pour actionner un élément de réglage de plan horizontal sur un avion, **caractérisé en ce qu**'il est constitué par un dispositif selon l'une des revendications précédentes.

## Claims

1. Actuation device for aircraft flight control, comprising at least two drive trains (1, 2) and a differential (3) designed to connect the output of each of the trains to a control shaft (6) itself connected to an element to be actuated (10), and locking means (11a, 11b) mounted on the output of each of the trains, upstream of the differential (3), to lock the drive trains in the event that they should not operate,
**characterized in that** said locking means (11a, 11b) are suitable for operating without external actuation so as to:
• allow the action forces originating from the corresponding drive train (4, 5) to pass, in order to drive the control shaft (6);
• lock the reaction forces originating from the control shaft (6) when said corresponding drive train does not operate.

2. Device according to the preceding claim, in which the output of each of the trains comprises a shaft (4, 5) connected to one of the said locking means (11a, 11b), **characterized in that** the said locking means (11a, 11b) each comprise a device for the unidirectional rotation of two shafts, connected, on the one hand, to the output shaft (4, 5) of the corresponding drive train (1, 2) and; on the other hand, to an input shaft of the differential (3) and suitable for the rotation of the drive train output shaft to cause that of the differential input shaft and for the rotation of the differential input shaft to be neutralized, not causing that of the drive train output shaft to move.

3. Device according to the preceding claim, **characterized in that** the device for unidirectional rotation is of the irreversible freewheel type.

4. Device according to one of the preceding claims, **characterized in that** the differential is a speed summing element such that the control shaft (6) at the output of the differential (3) is driven at a speed of rotation that is a function of the sum of the speeds of rotation of the motors (7a, 7b).

5. Device according to the preceding claim, **characterized in that** the differential that is the speed summing element makes it possible to drive the control shaft at a speed of rotation equal to half the sum of the speeds of rotation of the said motors (7a, 7b).

6. Device according to one of the preceding claims, **characterized in that** the drive trains are of the hydraulic type.

7. Device according to one of Claims 1 to 5, **characterized in that** the drive trains are of the electric type.

8. Device for actuating a horizontal control surface adjustment element on an aircraft, **characterized in that** it consists of a device according to one of the preceding claims.

## Patentansprüche

1. Betätigungsvorrichtung zur Flugsteuerung eines Luftfahrzeugs, welches wenigstens zwei Antriebsketten (1,2) und ein Differentialgetriebe (3) umfasst, das dazu bestimmt ist, den Ausgang jeder der Ketten mit einer Antriebswelle (6) zu verbinden, die selbst mit einem zu betätigenden Element (10) verbunden ist, sowie Blockierungsmittel (11a, 11b), die auf dem Ausgang jeder der Ketten, dem Differentialgetriebe (3) vorgeschaltet, montiert sind, um die Antriebsketten in dem Fall zu blockieren, bei dem sie nicht funktionieren, **dadurch gekennzeichnet, dass** die Blockierungsmittel (11a, 11b) ausgelegt sind, ohne äußere Betätigung zu funktionieren, um
• die von der entsprechenden Antriebskette (4,5) stammenden Aktionskräfte für den Antrieb der Antriebswelle (6) durchzulassen;
• die von der Antriebswelle (6) stammenden Reaktionskräfte, zu blockieren, wenn die entsprechende Antriebskette nicht funktioniert.

2. Vorrichtung gemäß dem vorhergehenden Anspruch, bei welcher der Ausgang jeder der Ketten eine Welle (4,5) umfasst, die mit einem der Blockierungsmittel (11a, 11b) verbunden ist, **dadurch gekennzeichnet, dass** jedes der Blockierungsmittel (11a, 11b) ein in eine Richtung gerichtetes, rotationsmäßiges Antriebsmittel mit zwei Wellen umfasst, das einerseits mit der Welle am Ausgang (4,5) der entsprechenden Antriebskette (1,2) verbunden ist, und andererseits mit einer Welle am Eingang des Differentialgetriebes (3), und ausgelegt ist, damit die Rotation der Welle am Ausgang der Antriebskette diese der Welle am Eingang des Differentialgetriebes antreibt, und damit die Rotation der Welle am Eingang des Differentialgetriebes neutralisiert wird, wobei sie nicht diese der Welle am Ausgang der Antriebskette antreibt.

3. Vorrichtung gemäß dem vorhergehenden Anspruch, **dadurch gekennzeichnet, dass** die in eine Richtung gerichtete, rotationsmäßige Antriebsvorrichtung vom Typ freies, selbstsperrendes Rad ist.

4. Vorrichtung gemäß einem der vorhergehenden Ansprüche, **dadurch gekennzeichnet, dass** das Differentialgetriebe ein Geschwindigkeitssummierer ist, damit die Antriebswelle (6) am Ausgang des Differentialgetriebes (3) mit einer Rotationsgeschwindigkeit in Abhängigkeit der Summe der Rotationsgeschwindigkeiten (7a, 7b) der Motoren angetrieben wird.

5. Vorrichtung gemäß dem vorhergehenden Anspruch, **dadurch gekennzeichnet, dass** der Differentialgetriebe-Geschwindigkeitssummierer es erlaubt, die Antriebswelle mit einer Rotationsgeschwindigkeit gleich der halben Summe der Rotationsgeschwindigkeiten der Motoren (7a, 7b) anzutreiben.

6. Vorrichtung gemäß einem der vorhergehenden Ansprüche, **dadurch gekennzeichnet, dass** die Antriebsketten von hydraulischem Typ sind.

7. Vorrichtung gemäß einem der Ansprüche 1 bis 5, **dadurch gekennzeichnet, dass** die Antriebsketten von elektrischem Typ sind.

8. Vorrichtung, um ein Element zur Einstellung der Horizontalebene in einem Flugzeug zu betätigen, **dadurch gekennzeichnet, dass** es aus einer Vorrichtung gemäß einem der vorhergehenden Ansprüche gebildet ist.
